# EUROPÄISCHE PATENTANMELDUNG

(11) **EP 4 647 560 A2**
(43) Veröffentlichungstag der Anmeldung: **12.11.2025**
(21) Anmeldenummer: 25171311.1
(22) Anmeldetag: 17.04.2025
(51) Int. Cl.: E03C 1/126, B01D 29/03, B01D 35/02, E03C 1/26, E03F 5/04

(54) **VORRICHTUNG ZUM REINHALTEN EINER WASSERABLAUFRINNE**

(30) Priorität: 19.04.2024 DE 202024101962 U
(71) Anmelder: Bilz, Jasmin, 63546 Hammersbach (DE); Bilz, Rocky, 61130 Nidderau (DE); Bilz, Kevin, 63695 Glauburg (DE); Bilz, Enrico, 61130 Nidderau (DE); Bilz, Pierre, 61130 Nidderau (DE)
(72) Erfinder: Bilz, Karl-Heinz, 61130 Nidderau (DE)
(74) Vertreter: Farago-Schauer, Peter Andreas

(57) **Zusammenfassung**

Die vorliegende Erfindung betrifft eine Vorrichtung 1; 1' zum Reinhalten einer Wasserablaufrinne 5, wobei die Vorrichtung ein längliches flaches Band aus einem Einweg-Filtermaterial 2; 2' aufweist, in oder an dem mindestens zwei in Längsrichtung des Bandes beabstandete Taschen ausgebildet sind, in denen eine sich in Wasser allmählich auflösende Substanz 3 enthalten ist. Die Vorrichtung 10 kann alternativ mindestens einen Substanzhalter 11 aufweisen, der dafür eingerichtet ist, die sich in Wasser allmählich auflösende Substanz 13 aufzunehmen und in der Wasserablaufrinne 5 festgeklemmt zu werden, wobei der Substanzhalter 11 topfförmig ist, mit einem mit Öffnungen versehenen flachen Boden, einem Mantel, der radial außen vorgespannte Federzungen 16 trägt, und einer offenen Oberseite.

## Beschreibung

Die Erfindung betrifft eine Vorrichtung zum Reinhalten einer Wasserablaufrinne, insbesondere einer Duschrinne einer bodengleichen Dusche.

Der Boden einer Wasserablaufrinne wie z. B. einer Duschrinne hat ein relativ geringes Gefälle, und die Fließgeschwindigkeit innerhalb der Rinne ist geringer als bei einem konventionellen Punktablauf, weshalb Schmutz nur schwer fortgespült wird und nach jeder Benutzung relativ viel schmutziges Wasser darin stehen bleibt. Dadurch entsteht ein dauerhaftes Mikroklima, das Bakterienwachstum fördert. Um Geruchsbelästigungen vorzubeugen, muss man Duschrinnen relativ häufig reinigen, insbesondere irgendwelche Siebe oder Filter darin, was lästig sein kann.

Die DE 20 2018 100 546 U1 offenbart eine Vorrichtung zum Reinhalten einer Wasserablaufrinne in Form eines sanitärtechnischen Abflussrinnenfilters mit vielen Noppen oder Borsten, von denen einige fehlen und dadurch eine Vertiefung ausbilden, in die ein Pressstück, wie z. B. ein Reinigungs- oder Duftstein, mit oder aus einer sich in Wasser allmählich auflösenden Substanz passt und dann von den umgebenden Noppen gegen Herausfallen gesichert wird. Diese Reinhaltevorrichtung ist recht einfach herstellbar, fängt gut Haare auf, ohne zu verstopfen, ist leicht an unterschiedlich große Abflussrinnen anpassbar und auch recht leicht zu reinigen.

Der vorliegenden Erfindung liegt die Aufgabe zugrunde, eine Reinhaltevorrichtung für eine Wasserablaufrinne bereitzustellen, die noch einfacher herstellbar ist und die es dem Benutzer noch mehr erleichtert oder sogar erspart, die Wasserablaufrinne sauber und geruchsfrei zu halten.

Diese Aufgabe wird durch eine Vorrichtung zum Reinhalten einer Wasserablaufrinne gelöst, die ein längliches flaches Band aus einem Einweg-Filtermaterial aufweist, in oder an dem mindestens zwei in Längsrichtung des Bandes voneinander beabstandete Taschen ausgebildet sind, in denen eine sich in Wasser allmählich auflösende Substanz enthalten ist.

Diese Reinhaltevorrichtung kann der Benutzer einfach der Länge nach unterhalb eines Rostes auf den Boden der Wasserablaufrinne legen. Im Gebrauch der Dusche entfaltet die sich in Wasser allmählich auflösende Substanz ihre Wirkung, indem sie z. B. ein Antiseptikum, ein keimtötendes Mittel, eine antibakterielle und/oder fungizide Substanz, ein Deodorant, einen Duftstoff, ein Parfüm, ein Reinigungsmittel oder eine andere wasserlösliche Substanz oder ein Gemisch der vorgenannten Substanzen ist oder enthält. Die wasserlösliche Substanz kann portionsweise in Folien verpackt sein, die sich mit der Zeit im Wasser lösen und das Freisetzen der Substanz verlangsamen. Solange sie nicht verbraucht ist, hält die sich in Wasser allmählich auflösende Substanz außerdem durch ihr Eigengewicht das Band auf dem Boden der Wasserablaufrinne, so dass es nicht leicht verrutscht.

Der Benutzer muss sich dann für längere Zeit nicht mehr um die Reinigung der Wasserablaufrinne kümmern, und wenn es so weit ist, entfernt und entsorgt er die Reinhaltevorrichtung einfach zusammen mit darin angesammeltem Schmutz, wie z. B. Haaren, und ersetzt sie durch eine neue.

Die Taschen können in unregelmäßigen oder vorzugsweise in regelmäßigen Abständen angeordnet sein.

In einer bevorzugten Weiterbildung der Vorrichtung enthält jede Tasche ein Pressstück aus der sich in Wasser allmählich auflösenden Substanz, insbesondere einen Reinigungs- oder Duftstein.

In einer bevorzugten Weiterbildung der Vorrichtung besteht das Einweg-Filtermaterial aus einem wasserresistenten Filterpapier, wie z. B. Teebeutel-Material, einem Gewebe, wie z. B. Gaze, oder aus einem Vlies.

In einer bevorzugten Weiterbildung der Vorrichtung weist das Band partiell oder ganzflächig zwei Lagen des Einweg-Filtermaterials auf, die partiell miteinander verbunden sind, um die Taschen auszubilden.

In einer bevorzugten Weiterbildung der Vorrichtung besteht das Band aus einer ersten Lage Einweg-Filtermaterial und mehreren kleineren, z. B. ausgestanzten, Stücken Einweg-Filtermaterial, welche jeweils ringsum mit der ersten Lage Einweg-Filtermaterial verbunden sind, um die Taschen auszubilden.

Alternativ kann das Band aus zwei gleich großen Lagen Einweg-Filtermaterial bestehen, die partiell miteinander verbunden sind, um die Taschen auszubilden.

Das Einweg-Filtermaterial kann schlauchförmig und zu den beiden Lagen zusammengefügt sein.

Alternativ kann das Band aus einem zunächst einlagigen Einweg-Filtermaterial hergestellt werden, das partiell rückwärts und wieder vorwärts gefaltet wird, um die Taschen auszubilden.

Zweckmäßigerweise hat das Band eine zu der Breite der Wasserablaufrinne passende Breite, zum Beispiel kann es gleich breit oder etwas schmaler oder breiter sein.

Das Band kann außerdem eine zu der Länge der Wasserablaufrinne passende Länge haben. Zum Beispiel kann es gleich lang oder etwas kürzer oder länger sein.

In einer bevorzugten Weiterbildung der Vorrichtung hat das Band eine Länge, die um ein Vielfaches größer ist als die Länge der Wasserablaufrinne. Ein derartiges Band kann zusammen mit den sich in Wasser allmählich auflösenden Substanz(stück)en in Form von praktischen Rollen vertrieben werden, von denen der Benutzer die jeweils benötigte Länge abrollen und abtrennen kann.

Das Abtrennen von einer Rolle kann dadurch erleichtert werden, dass das Band zwischen je zwei Taschen, die jeweils eine sich in Wasser allmählich auflösende Substanz enthalten, eine Solltrennlinie aufweist, z. B. als Abreiß-Perforierung, wobei je zwei benachbarte Perforierungen vorzugsweise einen Abstand voneinander haben, der den Längenabstufungen handelsüblicher Wasserablaufrinnen entspricht.

In einer weiteren Ausführungsform der Erfindung wird die obige Aufgabe auch durch eine Vorrichtung zum Reinhalten einer Wasserablaufrinne gelöst, die mindestens einen Substanzhalter aufweist, der dafür eingerichtet ist, eine sich in Wasser allmählich auflösende Substanz aufzunehmen und in der Wasserablaufrinne festgeklemmt zu werden, wobei der Substanzhalter topfförmig ist, mit einem mit Öffnungen versehenen flachen Boden, einem vorzugsweise mit Öffnungen versehenen und vorzugsweise zylindrischen Mantel, der radial außen vorgespannte Federzungen trägt, und einer offenen Oberseite.

Eine in der Wasserablaufrinne festgeklemmte Reinhaltevorrichtung dieser zweiten Ausführungsform kann zwar keine Haare aus dem Ablaufwasser filtern, abgesehen von solchen, die zufällig an dem Substanzhalter hängen bleiben, doch kann sie Bakterienwachstum bzw. daraus resultierende Gerüche verhindern oder zumindest hemmen, wenn man die sich in Wasser allmählich auflösende Substanz hineingibt, welche durch die Öffnungen und die offene Oberseite hindurch nach und nach freigesetzt wird.

Diese Reinhaltevorrichtung umfasst vorzugsweise mindestens ein in den Substanzhalter passendes Pressstück aus der sich in Wasser allmählich auflösenden Substanz, insbesondere einen Reinigungs- oder Duftstein. Im Handel kann eine derartige Reinhaltevorrichtung dieser zweiten Ausführungsform z. B. einzeln, zweifach und/oder in Kombination mit einer Anzahl von Reinigungs- oder Duftsteinen angeboten werden.

In einer bevorzugten Weiterbildung der zweiten Ausführungsform sind die Federzungen auf einander radial entgegengesetzten Außenseiten des Mantels angeformt und erstrecken sich im gleichen Drehsinn spiralig radial nach außen. Dies ermöglicht es, den Substanzhalter sehr schnell und einfach in einer Wasserablaufrinne zu fixieren.

Der Substanzhalter hat vorzugsweise einen zu der Breite der Wasserablaufrinne passenden Durchmesser und eine zu der Tiefe der Wasserablaufrinne passende Höhe, wobei seine Höhe kleiner sein sollte als die Tiefe der Wasserablaufrinne, um den Wasserablauf nicht übermäßig zu stören.

Zwei derartige Substanzhalter eignen sich außerdem hervorragend, um ein längliches flaches Band aus einem Einweg-Filtermaterial in der Wasserablaufrinne zu fixieren, mit dem auch Haare vollständig aus dem Ablaufwasser gefiltert werden können. Dazu wird einfach das Band der Länge nach auf den Boden der Wasserablaufrinne gelegt, und auf seine Enden wird je einer der Substanzhalter gesetzt. In dieser Ausführungsform muss das Band natürlich nur eine Lage Einweg-Filtermaterial aufweisen, da es keine Pressstücke enthalten muss, wenngleich sich die beschriebenen Substanzhalter auch dafür eignen, ein Band mit daran angebrachten Pressstücken wie in der ersten Ausführungsform besser in der Rinne festzuhalten.

Im Handel können z. B. zwei derartige Substanzhalter in Kombination mit einem oder mehreren Filtermaterial-Bändern und einer Anzahl von Reinigungs- oder Duftsteinen angeboten werden.

Das Einweg-Filtermaterial kann ebenso wie in der ersten Ausführungsform aus einem Filterpapier, einem Gewebe oder einem Vlies bestehen, die Abmessungen des Einweg-Filtermaterials können ebenso wie in der ersten Ausführungsform sein, und es kann ebenfalls in Form von Rollen vorliegen, wahlweise mit Solltrennlinien.

Die vorstehend beschriebenen Reinhaltevorrichtungen werden vorzugsweise für Duschrinnen, die der Norm DIN 1986-100 genügen, und/oder bodengleiche Duschrinnen ausgelegt.

Es folgt eine Beschreibung von Ausführungsbeispielen anhand der Zeichnungen. Darin zeigen:
- Figur 1: perspektivisch eine ein Stück weit abgewickelte Rolle eines langen flachen Bandes aus einem Einweg-Filtermaterial, das in regelmäßigen Abständen Reinigungs- oder Duftsteine trägt.
- Figuren 2 und 3: perspektivisch jeweils ein Stück des Bandes aus Einweg-Filtermaterial.
- Figur 4: perspektivisch das Bandstück der Figuren 2 und 3, wie es in eine Duschrinne eingelegt ist.
- Figuren 5 und 6: perspektivisch jeweils ein Stück eines Bandes aus Einweg-Filtermaterial und Reinigungs- oder Duftsteinen eines weiteren Ausführungsbeispiels.
- Figur 7: perspektivisch das Bandstück der Figuren 5 und 6, wie es in eine Duschrinne eingelegt ist.
- Figur 8: perspektivisch zwei Substanzhalter, ein Stück Band aus Einweg-Filtermaterial und einen einzelnen Reinigungs- oder Duftstein über einer Duschrinne schwebend.
- Figuren 9 und 10: perspektivisch bzw. in Draufsicht die zwei Substanzhalter und das Stück Band aus Einweg-Filtermaterial der Fig. 8, wie sie in die Duschrinne eingesetzt sind.

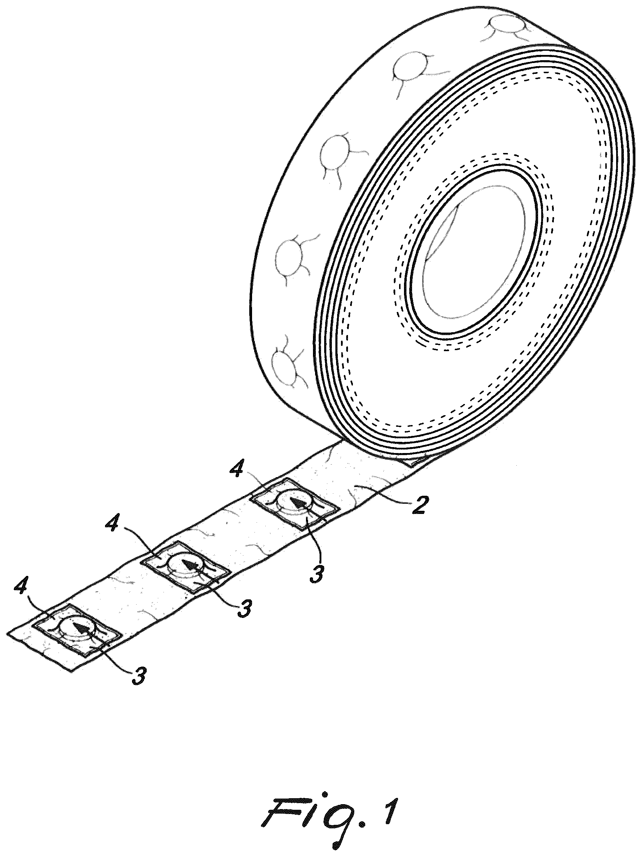

Die in den Figuren 1 bis 4 gezeigte Reinhaltevorrichtung 1 eines ersten Ausführungsbeispiels der Erfindung umfasst ein beliebig langes Stück Einweg-Filtermaterial 2 aus wasserresistentem Filterpapier oder einem anderen Material mit einer Netzstruktur, das in regelmäßigen Abständen von z. B. 20 cm Reinigungs- oder Duftsteine 3 trägt, die eine sich in Wasser allmählich auflösende Substanz enthalten oder daraus bestehen. Die Breite des Bandes aus Einweg-Filtermaterial 2 entspricht ungefähr der Breite einer handelsüblichen Duschrinne und bewegt sich z. B. zwischen 5 und 10 cm. Die Reinigungs- oder Duftsteine 3 haben ungefähr die Größe von üblichen Gebissreinigungs- oder Vitamin-Brausetabletten.

Das Einweg-Filtermaterial 2 aus wasserresistentem Filterpapier oder einem anderen Material mit einer Netzstruktur kann vorzugsweise in Form einer aufgewickelten BandRolle vorliegen, von der das Band auf eine passende Länge abgewickelt und beispielsweise mit einer Schere zugeschnitten wird, um in die handelsüblichen Duschrinnen zu passen. Somit kann das Einweg-Filtermaterial 2 leicht in der Länge an eine bestehende Duschrinne angepasst werden. Die Beschaffenheit des Einweg-Filtermaterials 2 erlaubt, falls erforderlich, auch eine simple Anpassung an die Breite der Duschrinne. Obiges gilt für alle Ausführungsformen der Erfindung.

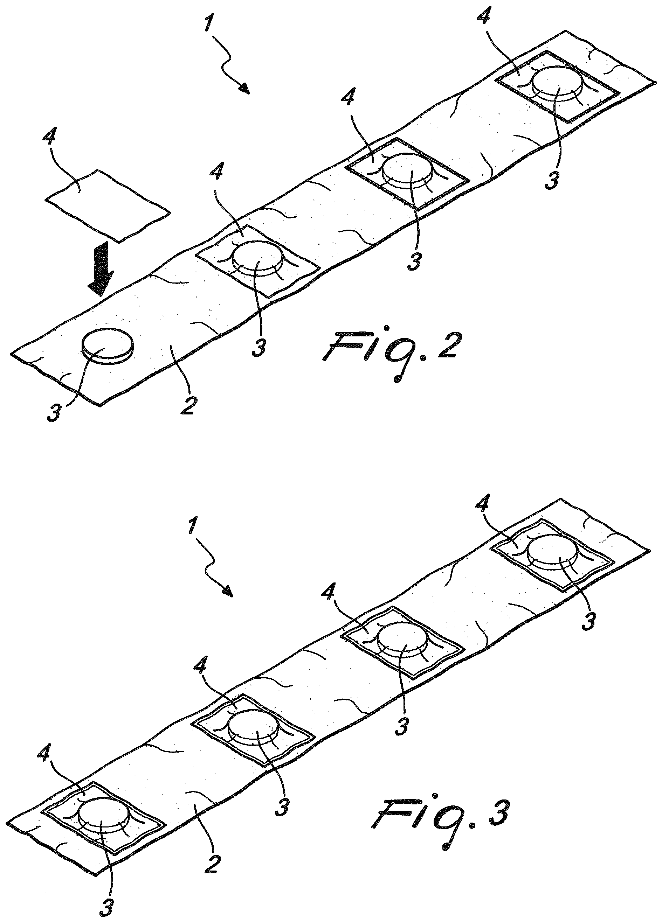

Figuren 2 und 3 zeigen ein entsprechend der Länge einer reinzuhaltenden Duschrinne abgeschnittenes Stück des Einweg-Filtermaterials 2 und veranschaulichen auch, wie die Reinigungs- oder Duftsteine 3 an dem Einweg-Filtermaterial 2 angebracht sind, nämlich mittels Flicken 4, die etwas größer sind als die Reinigungs- oder Duftsteine 3 breit sind. Jeder Flicken 4 ist über je einem Reinigungs- oder Duftstein 3 ringsum mit dem Einweg-Filtermaterial 2 verbunden, z. B. durch Prägen, wie bei Teebeuteln üblich, oder durch Kleben, Verschweißen, Nähen oder dergleichen. Das heißt, zwischen dem Einweg-Filtermaterial 2 und den Flicken 4 wird jeweils eine Tasche ausgebildet, in der ein Reinigungs- oder Duftstein 3 eingeschlossen wird.

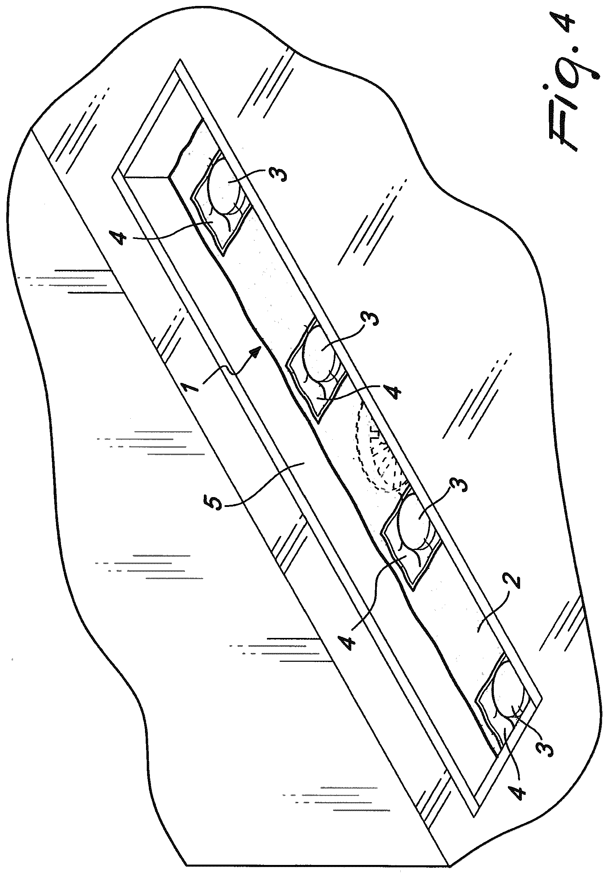

Zum Gebrauch wird das Stück Einweg-Filtermaterial 2 der Figuren 1 und 2 der Länge nach auf den Boden der in Fig. 4 gezeigten Wasserablaufrinne 5, die als Duschrinne ausgelegt ist, gelegt, bevor diese mit einem nicht gezeigten Rost abgedeckt wird. Nachstehend wird die Duschrinne auch als Wasserablaufrinne bezeichnet.

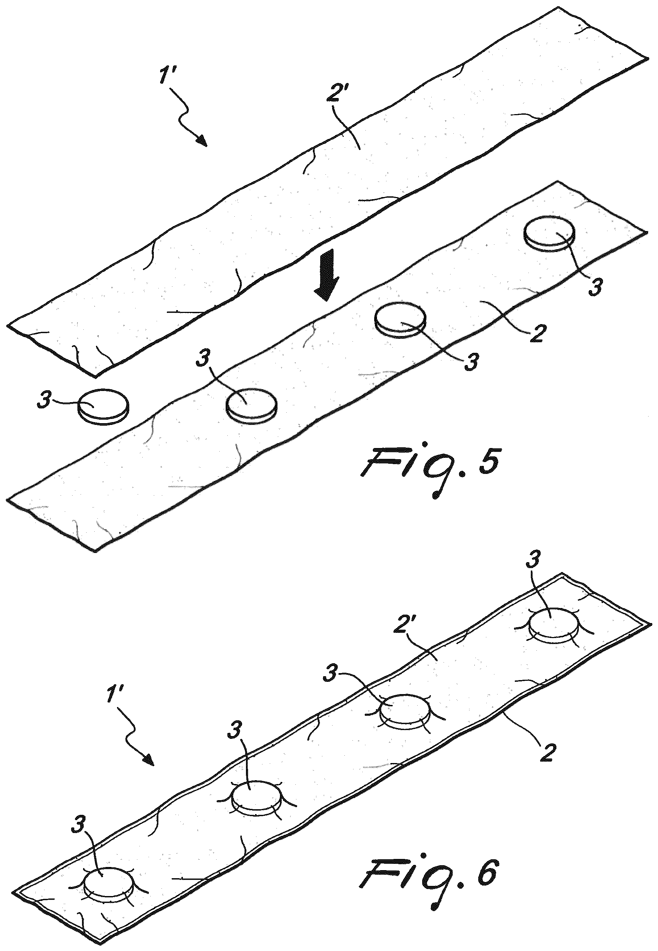

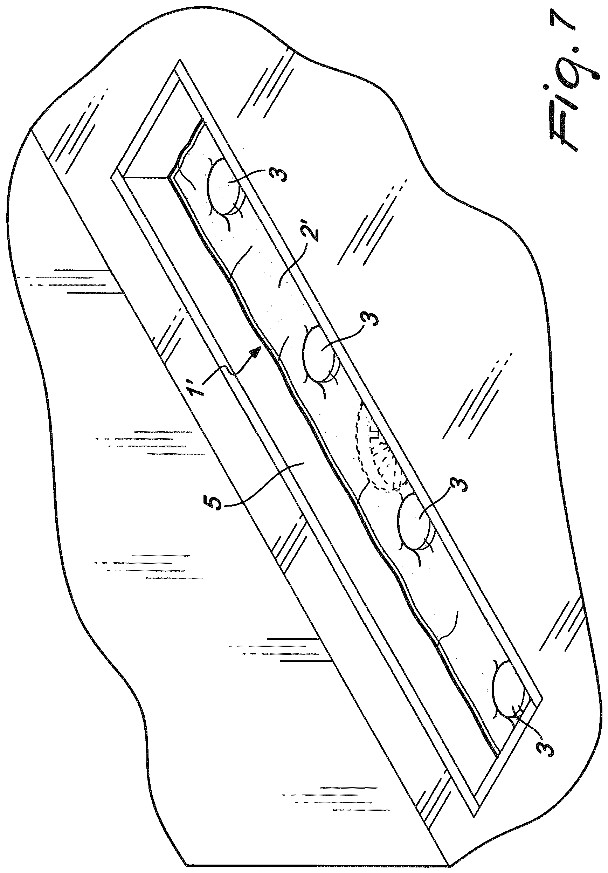

Die Taschen können auch auf andere Art als mittels aufgesetzter Flicken 4 gebildet werden, z. B. indem zwei gleich große oder ungefähr gleich große Stücke Einweg-Filtermaterial 2 und 2' mit den Reinigungs- oder Duftsteinen 3 dazwischen übereinander gelegt und partiell miteinander verbunden werden, um Taschen auszubilden, in denen je ein Reinigungs- oder Duftstein 3 eingeschlossen wird, um die in den Figuren 5 bis 7 gezeigte Reinhaltevorrichtung 1' der zweiten Ausführungsform der Erfindung zu bilden.

Diese Taschen können auch größer sein als die mit Hilfe der Flicken 4 des ersten Ausführungsbeispiels gebildeten Taschen, so dass eine Vielzahl von weiteren Möglichkeiten zu deren Bildung besteht. Zum Beispiel kann ein doppelt breites Band Einweg-Filtermaterial in eine Schlauchform gefaltet und zusammengefügt werden, um die Taschen auszubilden. Oder ein sehr langes Band aus Einweg-Filtermaterial wird einmal ein vorzugsweise kurzes Stück weit rückwärts gefaltet, mit einem Reinigungs- oder Duftstein 3 zwischen den so gebildeten Lagen, dann ein vorzugsweise längeres Stück weit vorwärts gefaltet, und so weiter, wobei alle Lagen partiell miteinander verbunden werden, um die Taschen auszubilden. Auch können die gefalteten Stücke gleich lang sein. Es entsteht somit ein Gebilde mit einem kontinuierlichen Band und mit abwechselnd auf den Seiten des kontinuierlichen Bandes gebildeten Taschen.

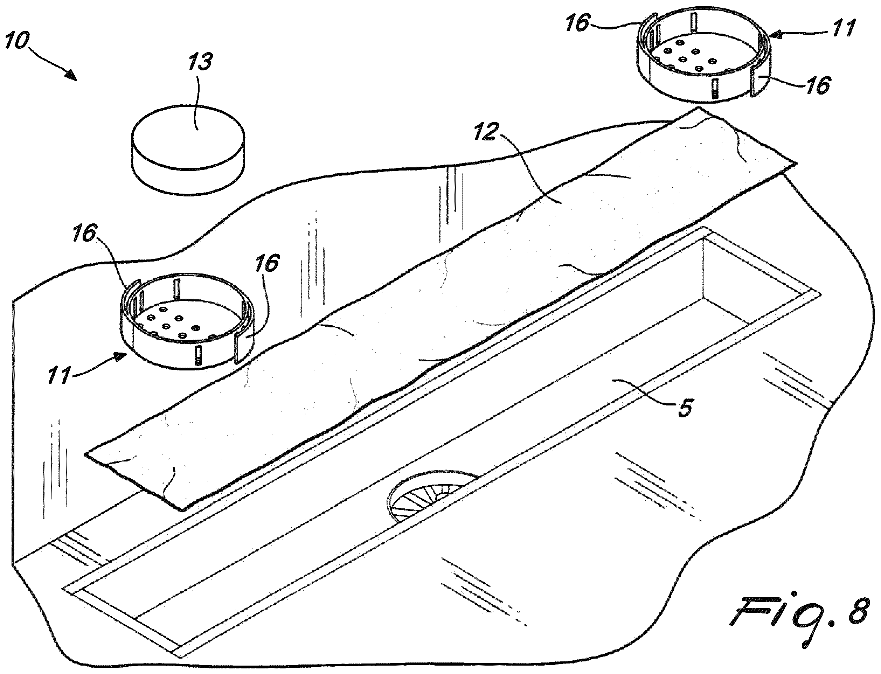

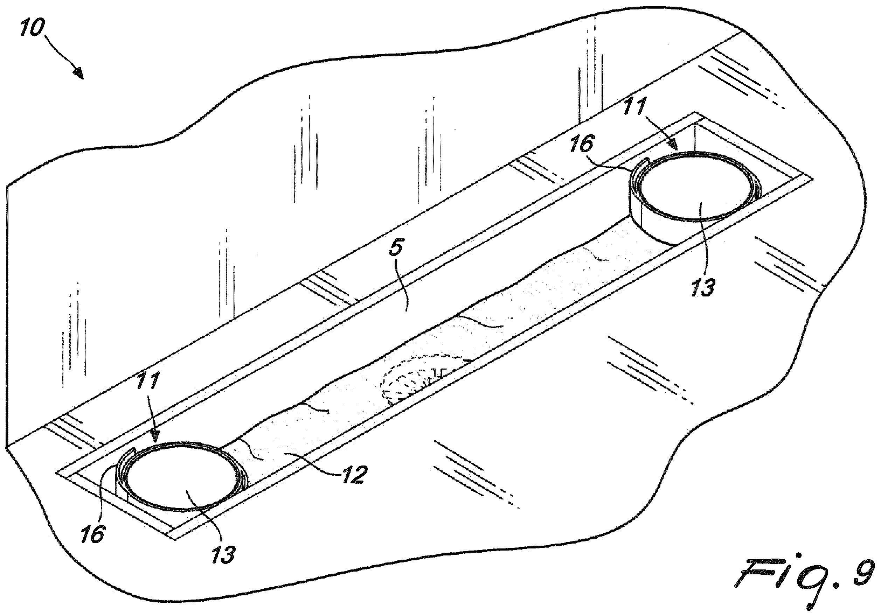

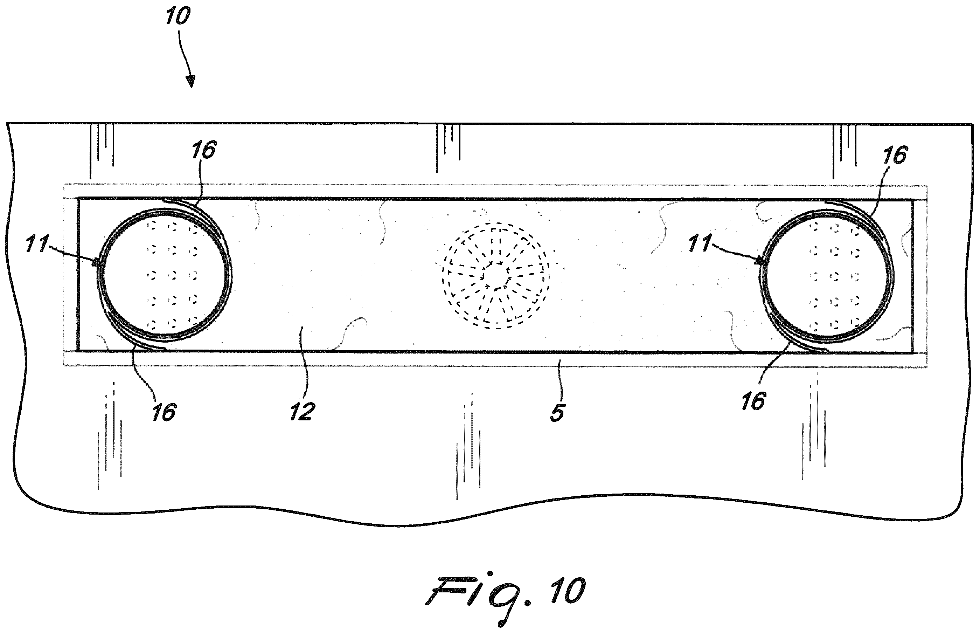

Die in Fig. 8 bis 10 gezeigte Reinhaltevorrichtung 10 eines dritten Ausführungsbeispiels umfasst ein längliches und ca. 5 bis 10 cm breites Band Einweg-Filtermaterial 12, das in diesem Ausführungsbeispiel nur einlagig zu sein braucht, aber auch mehrlagig sein kann, z. B. wie die Einweg-Filtermaterialien 2 oder 2' der vorhergehenden Ausführungsbeispiele. Die Reinhaltevorrichtung 10 umfasst außerdem zwei Reinigungs- oder Duftsteine 13, von denen in Fig. 8 nur einer gezeigt ist.

Die Reinhaltevorrichtung 10 umfasst ferner mindestens zwei topfförmige Substanzhalter 11 aus Kunststoff, die jeweils einen mit Löchern versehenen flachen Boden, einen vorzugsweise mit Schlitzen versehenen zylindrischen Mantel und eine offene Oberseite aufweisen. Auch Ausführungsformen mit mehr als zwei topfförmigen Substanzhaltern 11 mit einer entsprechenden Anzahl an Reinigungs- oder Duftsteinen 13 sind denkbar. Erfindungsgemäß kann der zylindrische Mantel als gerader Kreiszylinder ausgebildet sein. Allerdings sind auch andere abweichende Formen, wie etwa elliptisch, oval, rechteckig oder quadratisch mit oder ohne abgerundete Ecken denkbar.

Der zylindrische Mantel jedes Substanzhalters 11 hat einen einige Millimeter kleineren Durchmesser als die Wasserablaufrinne breit ist, und die Höhe jedes Substanzhalters 11 ist deutlich kleiner die Tiefe der Wasserablaufrinne.

Auf einander radial entgegengesetzten Außenseiten des zylindrischen Mantels jedes Substanzhalters 11 ist jeweils eine Federzunge 16 angeformt, wobei sich die Federzungen 16 im gleichen Drehsinn spiralig radial nach außen erstrecken, derart, dass sich ihre Außenflächen zu ihren Enden hin weiter voneinander entfernen als die Wasserablaufrinne breit ist.

Die Reinigungs- oder Duftsteine 13 sind jeweils so groß, dass sie in einen Substanzhalter 11 hineinpassen und diesen weitgehend ausfüllen.

Zum Gebrauch wird das Stück Einweg-Filtermaterial 12 der Länge nach auf den Boden der in den Figuren 8 bis 10 gezeigten als Duschrinne ausgelegten Wasserablaufrinne 5 gelegt und an seinen Enden fixiert, indem dort jeweils ein Substanzhalter 11 in die Duschrinne 5 gesetzt wird. Die Substanzhalter 11 können zum Beispiel in gegenüber den gezeigten Positionen um 90 Grad verdrehten Positionen in die Duschrinne 5 gesetzt und dann gedreht werden, bis die Federzungen 16 von den Seitenwänden der Duschrinne 5 zusammengedrückt werden und die Substanzhalter 11 darin festhalten. Alternativ könnte man die Federzungen 16 zum Einsetzen einfach mit den Fingern zusammendrücken. Ferner setzt man die Reinigungs- oder Duftsteine 13 in die Substanzhalter 11 ein. Vorzugsweise beträgt die Erstreckung der Federzungen 16 in etwa 90° um den Mantel, sofern dieser als gerader Zylinder ausgebildet ist.

Im eingesetzten Zustand klemmt der Substanzhalter 11 vorzugsweise das Einweg-Filtermaterial 12 zwischen sich und die Wandungen und/oder den Boden der Wasserablaufrinne 5. Auch kann vorzugsweise eine Klemmung des Einweg-Filtermaterials 12 an den Federzungen 16 stattfinden, beispielsweise zwischen den Federzungen 16 und dem Mantel des Substanzhalters 11.

In einem weiteren, nicht eigens dargestellten Ausführungsbeispiel werden zwei Substanzhalter 11 mit Reinigungs- oder Duftsteinen 13 ohne das Einweg-Filtermaterial 12 in der Duschrinne 5 fixiert. Eine derartige in der Duschrinne 5 festgeklemmte Reinhaltevorrichtung kann zwar keine Haare aus dem Ablaufwasser filtern, doch kann sie Bakterienwachstum bzw. daraus resultierende Gerüche verhindern oder zumindest hemmen.

Die Erfindung kann auch die folgenden Gegenstände umfassen:
Gegenstand 1: Vorrichtung (1; 1') zum Reinhalten einer Wasserablaufrinne (5), wobei die Vorrichtung ein längliches flaches Band aus einem Einweg-Filtermaterial (2; 2') aufweist, in oder an dem mindestens zwei in Längsrichtung des Bandes beabstandete Taschen ausgebildet sind, in denen eine sich in Wasser allmählich auflösende Substanz (3) enthalten ist.
Gegenstand 2: Vorrichtung (1; 1') nach Gegenstand 1, wobei jede Tasche ein Pressstück aus der sich in Wasser allmählich auflösenden Substanz (3) enthält, insbesondere einen Reinigungs- oder Duftstein.
Gegenstand 3: Vorrichtung (1; 1') nach Gegenstand 1 oder 2, wobei das Einweg-Filtermaterial (2; 2') aus einem Filterpapier, einem Gewebe oder einem Vlies besteht.
Gegenstand 4: Vorrichtung (1; 1') nach einem der vorhergehenden Gegenstände, wobei das Band partiell oder ganzflächig zwei Lagen des Einweg-Filtermaterials (2; 2') aufweist, die partiell miteinander verbunden sind, um die Taschen auszubilden.
Gegenstand 5: Vorrichtung (1) nach Gegenstand 4, wobei das Band aus einer ersten Lage Einweg-Filtermaterial (2) und mehreren kleineren Stücken Einweg-Filtermaterial (4) besteht, welche jeweils ringsum mit der ersten Lage Einweg-Filtermaterial (2) verbunden sind, um die Taschen auszubilden, wobei die kleineren Stücke (4) als Flicken ausgebildet sind.
Gegenstand 6: Vorrichtung (1') nach Gegenstand 4, wobei das Band aus zwei gleich großen Lagen Einweg-Filtermaterial (2; 2') besteht, die partiell miteinander verbunden sind, um die Taschen auszubilden.
Gegenstand 7: Vorrichtung (1') nach Gegenstand 6, wobei das Einweg-Filtermaterial (2; 2') schlauchförmig und zu den beiden Lagen zusammengefügt ist.
Gegenstand 8: Vorrichtung (1') nach Gegenstand 4, wobei das Band aus einem Einweg-Filtermaterial (2; 2') hergestellt ist, das partiell rückwärts und wieder vorwärts gefaltet ist, um die Taschen auszubilden.
Gegenstand 9: Vorrichtung (1; 1') nach einem der vorhergehenden Gegenstände, wobei das Band eine zu der Breite der Wasserablaufrinne (5) passende Breite hat oder zuschneidbar ist.
Gegenstand 10: Vorrichtung (1; 1') nach einem der vorhergehenden Gegenstände, wobei das Band eine zu der Länge der Wasserablaufrinne (5) passende Länge hat oder zuschneidbar ist.
Gegenstand 11: Vorrichtung (1; 1') nach einem der Gegenstände 1 bis 8, wobei das Band eine Länge hat, die um ein Vielfaches größer ist als die Länge der Wasserablaufrinne (5).
Gegenstand 12: Vorrichtung (1; 1) nach Gegenstand 11, wobei das Band zwischen je zwei Taschen, die jeweils die sich in Wasser allmählich auflösende Substanz (3) enthalten, eine Solltrennlinie aufweist.
Gegenstand 13: Vorrichtung (10) zum Reinhalten einer Wasserablaufrinne (5), die mindestens einen Substanzhalter (11) aufweist, der dafür eingerichtet ist, eine sich in Wasser allmählich auflösende Substanz (13) aufzunehmen und in der Wasserablaufrinne (5) festgeklemmt zu werden, wobei der Substanzhalter (11) topfförmig ist, mit einem mit Öffnungen versehenen flachen Boden, einem Mantel, der radial außen vorgespannte Federzungen (16) trägt, und einer offenen Oberseite.
Gegenstand 14: Vorrichtung (10) nach Gegenstand 13, wobei der Mantel zylindrisch und vorzugsweise mit Öffnungen versehen ist.
Gegenstand 15: Vorrichtung (10) nach Gegenstand 13 oder 14, wobei die Vorrichtung (10) mindestens ein in den Substanzhalter (11) passendes Pressstück aus der sich in Wasser allmählich auflösenden Substanz (13) umfasst, insbesondere einen Reinigungs- oder Duftstein.
Gegenstand 16: Vorrichtung (10) nach einem der Gegenstände 13 bis 15, wobei die Federzungen (16) auf einander radial entgegengesetzten Außenseiten des Mantels des Substanzhalters (11) angeformt sind und sich im gleichen Drehsinn spiralig radial nach außen erstrecken.
Gegenstand 17: Vorrichtung (10) nach einem der Gegenstände 13 bis 16, wobei der Substanzhalter (11) ein zu der Breite der Wasserablaufrinne (5) passendes Breitenmaß und eine zu der Tiefe der Wasserablaufrinne (5) passende Höhe hat.
Gegenstand 18: Vorrichtung (10) nach einem der Gegenstände 13 bis 17, wobei die Vorrichtung (10) mindestens zwei der Substanzhalter (11) sowie ein längliches flaches Band aus einem Einweg-Filtermaterial (12) aufweist.
Gegenstand 19: Vorrichtung (10) nach Gegenstand 18, wobei das Einweg-Filtermaterial (12) aus einem Filterpapier, einem Gewebe oder einem Vlies besteht.
Gegenstand 20: Vorrichtung (10) nach Gegenstand 18 oder 19, wobei das Band eine zu der Breite der Wasserablaufrinne (5) passende Breite hat oder zuschneidbar ist.
Gegenstand 21: Vorrichtung (10) nach einem der Gegenstände 18 bis 20, wobei das Band eine zu der Länge der Wasserablaufrinne (5) passende Länge hat oder zuschneidbar ist.
Gegenstand 22: Vorrichtung (10) nach einem der Gegenstände 19 bis 20, wobei das Band eine Länge hat, die um ein Vielfaches größer ist als die Länge der Wasserablaufrinne (5), wobei das Band optional Solltrennlinien aufweist.
Gegenstand 23: Vorrichtung (1; 1'; 10) nach einem der vorhergehenden Gegenstände, wobei die Wasserablaufrinne (5) als Duschrinne ausgebildet ist und wobei die Vorrichtung (1; 1'; 10) für eine Duschrinne ausgelegt ist, die der Norm DIN 1986-100 genügt.
Gegenstand 24: Vorrichtung (1; 1'; 10) nach einem der vorhergehenden Gegenstände, wobei die Wasserablaufrinne (5) als Duschrinne ausgebildet ist und wobei die Vorrichtung (1; 1'; 10) für eine bodengleiche Duschrinne ausgelegt ist.

### Bezugszeichenliste:

- 1, 1', 10: Reinhaltevorrichtung
- 2, 2', 12: Einweg-Filtermaterial
- 3, 13: sich in Wasser allmählich auflösende Substanz / Reinigungs- oder Duftstein
- 4: Flicken
- 5: Wasserablaufrinne / Duschrinne
- 11: Substanzhalter
- 16: Federzungen

## Patentansprüche

1. Vorrichtung (1; 1') zum Reinhalten einer Wasserablaufrinne (5), wobei die Vorrichtung ein längliches flaches Band aus einem Einweg-Filtermaterial (2; 2') aufweist, in oder an dem mindestens zwei in Längsrichtung des Bandes beabstandete Taschen ausgebildet sind, in denen eine sich in Wasser allmählich auflösende Substanz (3) enthalten ist.

2. Vorrichtung (1; 1') nach Anspruch 1, wobei jede Tasche ein Pressstück aus der sich in Wasser allmählich auflösenden Substanz (3) enthält, insbesondere einen Reinigungs- oder Duftstein.

3. Vorrichtung (1; 1') nach Anspruch 1 oder 2, wobei das Einweg-Filtermaterial (2; 2') aus einem Filterpapier, einem Gewebe oder einem Vlies besteht.

4. Vorrichtung (1; 1') nach einem der vorhergehenden Ansprüche, wobei das Band partiell oder ganzflächig zwei Lagen des Einweg-Filtermaterials (2; 2') aufweist, die partiell miteinander verbunden sind, um die Taschen auszubilden.

5. Vorrichtung (1) nach Anspruch 4, wobei das Band aus einer ersten Lage Einweg-Filtermaterial (2) und mehreren kleineren Stücken Einweg-Filtermaterial (4) besteht, welche jeweils ringsum mit der ersten Lage Einweg-Filtermaterial (2) verbunden sind, um die Taschen auszubilden, wobei die kleineren Stücke (4) als Flicken ausgebildet sind; oder
wobei das Band aus zwei gleich großen Lagen Einweg-Filtermaterial (2; 2') besteht, die partiell miteinander verbunden sind, um die Taschen auszubilden, wobei vorzugsweise das Einweg-Filtermaterial (2; 2') schlauchförmig und zu den beiden Lagen zusammengefügt ist; oder
wobei das Band aus einem Einweg-Filtermaterial (2; 2') hergestellt ist, das partiell rückwärts und wieder vorwärts gefaltet ist, um die Taschen auszubilden.

6. Vorrichtung (1; 1') nach einem der vorhergehenden Ansprüche, wobei das Band eine zu der Breite der Wasserablaufrinne (5) passende Breite hat oder zuschneidbar ist; und/oder
wobei das Band eine zu der Länge der Wasserablaufrinne (5) passende Länge hat oder zuschneidbar ist.

7. Vorrichtung (1; 1') nach einem der Ansprüche 1 bis 5, wobei das Band eine Länge hat, die um ein Vielfaches größer ist als die Länge der Wasserablaufrinne (5), wobei vorzugsweise das Band zwischen je zwei Taschen, die jeweils die sich in Wasser allmählich auflösende Substanz (3) enthalten, eine Solltrennlinie aufweist.

8. Vorrichtung (10) zum Reinhalten einer Wasserablaufrinne (5), die mindestens einen Substanzhalter (11) aufweist, der dafür eingerichtet ist, eine sich in Wasser allmählich auflösende Substanz (13) aufzunehmen und in der Wasserablaufrinne (5) festgeklemmt zu werden, wobei der Substanzhalter (11) topfförmig ist, mit einem mit Öffnungen versehenen flachen Boden, einem Mantel, der radial außen vorgespannte Federzungen (16) trägt, und einer offenen Oberseite.

9. Vorrichtung (10) nach Anspruch 8, wobei der Mantel zylindrisch und vorzugsweise mit Öffnungen versehen ist; und/oder
wobei die Vorrichtung (10) mindestens ein in den Substanzhalter (11) passendes Pressstück aus der sich in Wasser allmählich auflösenden Substanz (13) umfasst, insbesondere einen Reinigungs- oder Duftstein.

10. Vorrichtung (10) nach Anspruch 8 oder 9, wobei die Federzungen (16) auf einander radial entgegengesetzten Außenseiten des Mantels des Substanzhalters (11) angeformt sind und sich im gleichen Drehsinn spiralig radial nach außen erstrecken; und/oder
wobei der Substanzhalter (11) ein zu der Breite der Wasserablaufrinne (5) passendes Breitenmaß und eine zu der Tiefe der Wasserablaufrinne (5) passende Höhe hat.

11. Vorrichtung (10) nach einem oder mehreren der Ansprüche 8 bis 10, wobei die Vorrichtung (10) mindestens zwei der Substanzhalter (11) sowie ein längliches flaches Band aus einem Einweg-Filtermaterial (12) aufweist, wobei vorzugsweise das Einweg-Filtermaterial (12) aus einem Filterpapier, einem Gewebe oder einem Vlies besteht.

12. Vorrichtung (10) nach Anspruch 11, wobei das Band eine zu der Breite der Wasserablaufrinne (5) passende Breite hat oder zuschneidbar ist.

13. Vorrichtung (10) nach Anspruch 11 oder 12, wobei das Band eine zu der Länge der Wasserablaufrinne (5) passende Länge hat oder zuschneidbar ist.

14. Vorrichtung (10) nach einem oder mehreren der Ansprüche 11 bis 13, wobei das Band eine Länge hat, die um ein Vielfaches größer ist als die Länge der Wasserablaufrinne (5), wobei das Band optional Solltrennlinien aufweist.

15. Vorrichtung (1; 1'; 10) nach einem der vorhergehenden Ansprüche, wobei die Wasserablaufrinne (5) als Duschrinne ausgebildet ist und wobei die Vorrichtung (1; 1'; 10) für eine Duschrinne ausgelegt ist, die der Norm DIN 1986-100 genügt; und/oder
wobei die Wasserablaufrinne (5) als Duschrinne ausgebildet ist und wobei die Vorrichtung (1; 1'; 10) für eine bodengleiche Duschrinne ausgelegt ist.
